# EUROPEAN PATENT SPECIFICATION

(11) **EP 0 689 314 B1**
(45) Date of publication and mention of the grant of the patent: **25.10.2000**
(21) Application number: 95108198.3
(22) Date of filing: 30.05.1995
(51) Int. Cl.: H04L 5/06, H04L 7/04

(54) **Frame synchronization in a device receiving digital radio transmissions**
Rahmensynchronisierung in einem Rundfunkübertragungsempfänger
Synchronisation de trâme dans un récepteur de radiodiffusion numérique

(30) Priority: 16.06.1994 FI 942876
(43) Date of publication of application: 27.12.1995
(73) Proprietor: NOKIA TECHNOLOGY GmbH, 75175 Pforzheim (DE)
(72) Inventor: Junell, Jari, FIN-01620 Vantaa (FI); Kokkonen, Mikko, FIN-00200 Helsinki (FI)
(74) Representative: Stendel, Klaus

(56) References cited:
- EP-A- 0 369 917
- WO-A-91/19371
- US-A- 4 597 089
- M. SCHWARTZ ET AL. 'Communication sytems and techniques.' 1966 , MCGRAW-HILL BOOK COMPANY , (US) NEW YORK * page 56, line 17 - page 57, paragraph 2.3 *
- IEEE TRANSACTIONS ON VEHICULAR TECHNOLOGY, AUG. 1993, USA, vol. 42, no. 3, ISSN 0018-9545, pages 302-313, WARNER W D ET AL 'OFDM/FM frame synchronization for mobile radio data communication'

## Description

The invention relates to frame synchronization in a device receiving digital radio transmissions, and particularly to frame synchronization which is based on the fact that the transmitted signal frame has in a certain position for synchronization purposes an interval of a predetermined length without any signal.

One system in which the invention can find application is the European digital broadcasting system DAB (Digital Audio Broadcasting), which is now in development, and which is intended for the distribution of audio programs and other services to stationary or mobile receivers with the aid of a terrestrial transmitter network, with satellite transmitters, or with a mixed system formed by satellites and terrestrial transmitters. Below we will discuss this system in more detail in order to illustrate the technical background of the invention.

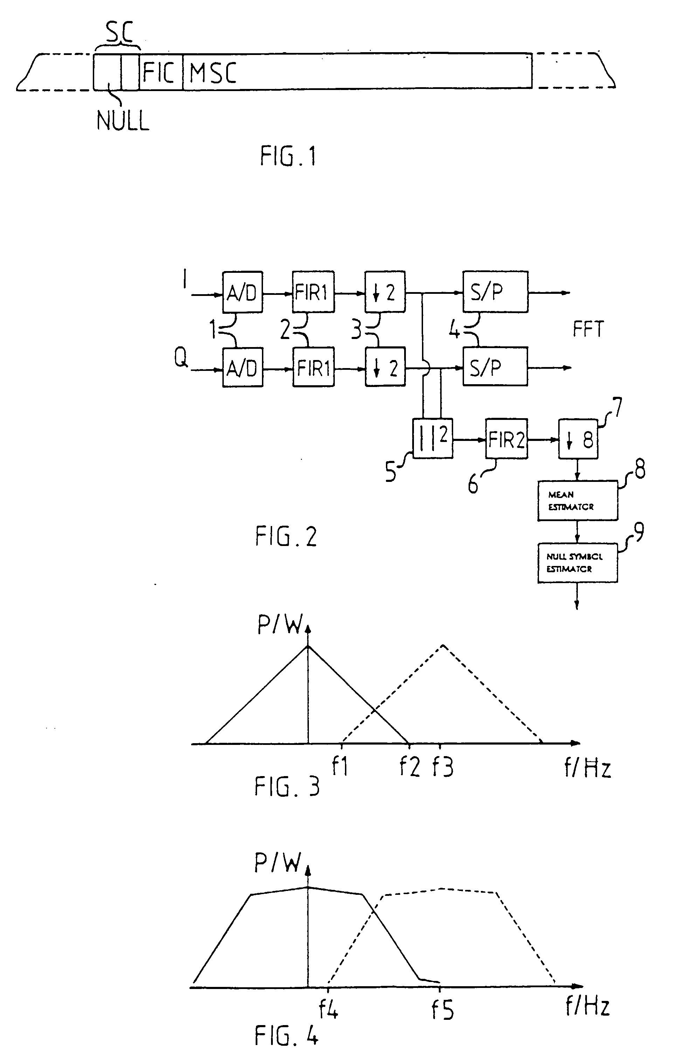

The signal in the DAB system is a signal which is formed by orthogonal frequency division multiplex (OFDM) and which comprises a plurality of carriers at equal intervals and adjacent to each other around a center frequency, whereby each carrier is modulated by e.g. D-QPSK modulation. The signal comprises sequential OFDM symbols, during which the modulating phase is kept constant on all carriers. The frame structure transmits several services in different parts of the frame, from which a receiver picks up and decodes a desired service. The services, which are encoded into OFDM symbols, will form the largest part of the frame, the main service channel, but at the beginning of the frame there is additionally a synchronization channel and a FIC information channel, which will transmit i.a. control information to the receivers. Figure 1 shows a DAB frame schematically.

Three different transmit modes I, II and III are defined for the DAB system, and the most important parameters of these are optimized for certain frequencies, on which the system is planned to be used. The table below shows the most important parameters of the transmission modes I, II and III. The transmission mode I is intended to be used basically on frequencies below 375 MHz in terrestrial networks, and particularly in so called single frequency networks. Mode II is intended to be used on the so called L-band in the range of 1452 to 1492 MHz, in terrestrial systems, satellite transmission systems, and in mixed systems. Mode III is also intended to be used in all the above mentioned systems on frequencies below 3000 MHz, and moreover, it is considered to be the best mode for cable transmissions.

**Table 1**

| **Parameter** | **Mode I** | **Mode II** | **Mode III** |
|---|---|---|---|
| OFDM symbols/frame | 76 | 76 | 153 |
| Number of carriers | 1536 | 384 | 192 |
| Length of frame | 196608 T | 49152 T | 49152 T |
| | 96 ms | 24 ms | 24 ms |
| Length of null symbol | 2656 T | 664 T | 345 T |
| | 1.297 ms | 0.324 ms | 0.168 ms |
| Length of other OFDM symbols | 2552 T | 638 T | 319 T |
| | 1.246 ms | 0.312 ms | 0.156 ms |
| Synchronization channel | 5208 T | 1302 T | 664 T |
| | 2.544 ms | 0.636 ms | 0.324 ms |
| Protection interval | 504 T | 126 T | 63 T |
| | 0.246 ms | 0.62 ms | 0.31 ms |

As shown in figure 1, each frame has first a synchronization cycle SC with the length of two symbols, of which the first symbol is a so called null symbol NULL, during which there is no transmission of the main signal, and not even transmission of the pure carrier. The null symbol is not considered as an OFDM symbol, and thus in the table 1 it is not included in the number showing the number of the OFDM symbols in a frame. The second symbol of the synchronization cycle is the phase reference symbol. This characteristic is intended to enable the realization of a rapid and reliable frame synchronization. During the null symbol it is possible to transmit, e.g. in every second frame, a low frequency signal for the identification of the transmitter. Essential parameters regarding the invention are the length of the frame and the length of the null symbol, which are shown in table 1 both as seconds and with the aid of the unit T, which is the basic length of a sample in the time domain signal and has the value T = 1/2048000 seconds.

The frame synchronization can be realized by analog means, e.g. by an envelope detector, whereby using suitable time constants for each transmission mode the detector can find a point in the signal where the signal level goes below a certain threshold level. The length of time, when the signal is below the threshold, can also be monitored in order to increase the reliability. Problems of this analog solution include changes in the detector circuit characteristics due to aging, and probably the tuning required in the device assembly due to variations in component values.

The object of the invention is to provide a digital solution, with which the frame synchronization can be realized in a reliable way using an interval without any signal, the null symbol, which for synchronization purposes exists in a certain position in the frame. The object of the invention is further to provide a solution, with which digital frame synchronization can be realized in a reliable way so that only a reasonable amount of processing capacity for this purpose is required in the receiving device, whereby the costs to realize the equipment will not increase substantially.

The principle of the solution according to the invention is to digitally examine the signal's envelope and to find a point where the signal goes below a predetermined relative level compared to a level which the signal had at a certain point in time, at least the length of the null symbol earlier than the examination instance. When this instance is found, then the process searches for the point in time when the signal exceeds the corresponding relative level. If the difference between the cross-over points is shorter than the length of the null symbol, then the mean of the measured cross-over times is accepted as the frame synchronization point. The final acceptance for this frame synchronization point is obtained if the next observation of the null symbol location is at a distance in time, which is one frame length from the determined frame synchronization point, with a tolerance corresponding to the symbol's protection interval. The synchronization point thus determined corresponds to the first sample of the next symbol following the null symbol.

The frame synchronization method according to the invention is characterized in claim 1. The circuit arrangement for the frame synchronization according to the invention is characterized in claim 7. The other claims present different embodiments of the method and the circuit arrangement according to the invention.

The invention is described below in more detail with reference to the enclosed drawings, in which:
figure 1 shows schematically the frame structure of a digital broadcasting system, received by a device, in which the invention can be applied;
figure 2 is a block diagram of circuit arrangement realizing the frame synchronization according to the invention;
figure 3 shows the signal spectrum after the squaring circuit contained in the circuit arrangement according to the invention, and the folded spectrum;
figure 4 shows signal spectrum after the decimating filter in the circuit arrangement according to the invention, and the folded spectrum created after the decimating;
figure 5 shows an example of the output of an mean estimator in the circuit arrangement according to the invention, the output being around the null symbol; and
figure 6 shows the block division principle of an embodiment of the mean estimator.

In the block diagram of figure 2 the blocks 1 to 4 represent a part of the output end of a device receiving a signal in a digital radio system, which in this description is represented by the European DAB system described in the general part of this description. In the output end the analog baseband I and Q signals are first converted into a digital form in the A/D converters 1, and then they are filtered by the last filters 2 of the channel filtering, in order to attenuate levels caused by neighboring channels to a negligible value. Decimating by two in the blocks 3 reduces the sample rate to 1/T, which is the nominal sample rate of the system before the FFT circuit and has the value 2.048 MHz. In the block diagram of figure 1 the signal branch continues to series/parallel converters 4, through which the signals are directed to the FFT circuit belonging to the OFDM detector.

The frame synchronization arrangement according to the invention starts at the squaring blocks 5, which calculate the power of each complex sample having the length T. This will broaden the signal spectrum so that in an ideal case the unfolded range is about 500 kHz. Figure 3 shows the spectrum after the squaring block, and the folded spectrum drawn with a broken line, whereby the power spectrum extends to the frequency f2 = 1.544 MHz; the sampling frequency is f3 = 2.048 MHz; and thus the unfolded spectrum extends to the frequency fl = 504 MHz.

In order the reduce the calculation requirements the sample rate is reduced with the decimating filter combination formed by the blocks 6 and 7. In order to ensure a low folding level after these blocks at the output of the mean estimator 8, the pass-band and modification bandwidths of the decimating filter 6 must be sufficiently narrow. When for example the decimating filter 6 is realized so that the pass-band is selected as 110 kHz, and the final value of the modification band as 220 kHz, then an "unfolded" bandwidth of 36 kHz is ensured in front of the mean estimator 8, when the decimation is made by 8. Figure 4 shows with an unbroken line the signal spectrum after the decimating filter 6, and with a broken line the folded spectrum created in block 7 after the decimating. The sampling frequency is now f5 = 256 kHz, and the "unfolded" bandwidth extends to the frequency f4 = 36 kHz. The first zero in the frequency response of the means estimator 8 in the transmission mode I is 771 Hz, in the transmission mode II it is 3.08 kHz, and in the transmission mode III it is 5.95 kHz. The "unfolded" bandwidth is still six times wider than the zero at the highest frequency of the mean estimator 8, so that the folding effect of the mean estimator's 8 output is quite small. The disadvantage of the decimating is the reduced accuracy in the time domain. For instance, the ideal time inaccuracy of the null symbol will change from the value ±T/2 to the value ±T/4, when the decimating is made by 8.

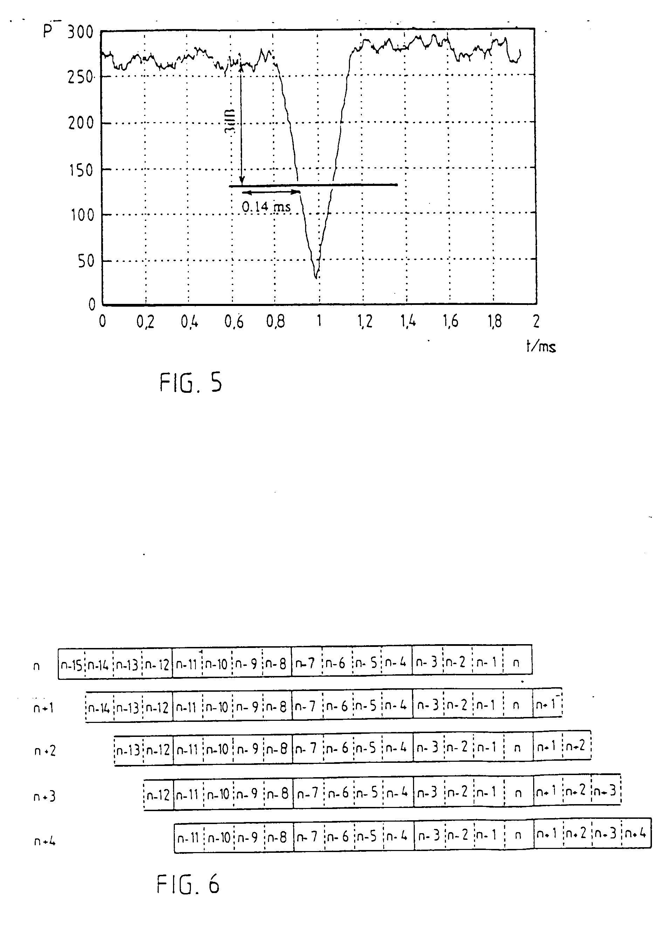

The mean estimator 8 provides a temporal mean of the signal for a period corresponding to the null symbol, or to corresponding to the null symbol less the protection interval, whereby an optimal function is obtained regarding two opposing requirements. On one hand it is advantageous to take the mean over a period as long as possible, so that the desired signal can be separated from the noise. On the other hand, the shorter the period which is used for taking the mean, or the wider the bandwidth of the filtering is, the better an interval without any signal can be separated from an interval with a signal. When the mean estimator 8 has a window with the length of the null symbol, then in an ideal case its output has a V-shape when it slides over the null symbol, i.e. it is still possible to obtain the greatest possible level difference in order to detect an interval without any signal. Figure 5 shows the output of the mean estimator 8 around the null symbol as an example regarding the transmission mode III in the DAB system. The bottom level of the V-shape is not zero, because during the null symbol noise is received from the channel.

In the case of a single frequency network, where the transmitters transmit a digital radio signal with the same contents on the same frequency, the receiving device can receive from different transmitters two strong signals with the same contents, whereby the delay between these two signals is at most of the order of the protection interval. Then the maximum level difference in the output of the mean estimator 8 is obtained when the mean of the received signal combination is taken over a period having a length of the null symbol minus the protection interval. When the mean estimator's 8 window is selected slightly shorter, but however less than one protection interval shorter than the null symbol, we get a compromise for different possible multi-path channels where this receiving device is supposed to operate.

In the mean estimator 8 the samples are grouped into blocks in order to reduce the calculation requirements. Figure 6 shows consecutive calculation cycles n, n+1, ..., n+4 of the mean estimator. In the example of the figure the length of the mean estimator window is 16 samples, and the samples marked as n-15, n-14, ..., n+4 are grouped into blocks of four samples each. The example is only illustrating; in reality the window or the block could comprise a much larger number of samples.

When the calculation uses fixed point arithmetics, the contents of each block is added and scaled separately before adding them in the output of the mean estimator. The savings in calculation are obtained so that when the calculation cycles progress, only those blocks at the ends of the window will change and the other block values are kept unchanged when they are added to the output. Thus only the contents of the blocks at the window ends at that moment must be added and scaled separately. In order to avoid overflow, the block length is determined by the ratio of the selected mean signal level and the allowed maximum value determined by the quantization.

The last block or the null symbol estimator 9 in figure 2 determines the position of the null symbol, based on the filtered samples supplied by the mean estimator 8. Each sample supplied by the mean estimator 8 corresponds to the mean for a period with the selected length of about one null symbol. An estimate of the null symbol is obtained by observing the level of the respective samples supplied by the mean estimator 8, compared to the output of the mean estimator a certain interval earlier, as is shown in figure 5. The example values of figure 5 relate to the transmission mode III of the DAB system. Thus the reference level is a sample, which was supplied by the mean estimator about the length of one transmission mode III null symbol or 0,14 ms earlier, and when the supplied sample from the mean estimator is below the reference level by a certain selected value, here 3 dB, that moment and the sample value is registered and an observation is started to find that moment when the sample value supplied by the mean estimator exceeds the previously registered lower value. If the difference between the cross-over points is shorter than the length of the null symbol, then it is decided that the null symbol is found. At the central point between the cross-over points there is the desired reference point of the frame. In the signal path of figure 2 the starting point of the window which is used in the FFT circuit is obtained from this reference point, taking into account the time difference between the signal branch and the null symbol detection branch.

The invention is described here in the context of the European DAB system in planning, but it is of course also possible to apply it to other corresponding systems, in which the frame synchronization is based on an interval without any signal and of a certain length in a certain position of the signal frame. The interval without any signal must of course not be the first symbol of the frame, as in the DAB system, but it could in principle be in any predetermined position in the frame.

Above we described in detail an embodiment of the application, but it obvious that the invention is not restricted to this. Of course the decimating filter can be realized using other values than those presented here, e.g. concerning different transmission modes, or depending on the decimating which by no means is restricted to decimating by eight. It is also clear that the 3 dB lower level selected for the comparison in the described embodiment is only one possible value, and when the solution according to the invention was developed, we found that a suitable value could be selected in the range between 3 and 5 dB. Of course also this range is only normative, and it does not limit the realization of the invention. The invention may vary within the scope of the enclosed claims.

## Claims

1. A method for frame synchronization in a device receiving a signal of a digital broadcasting system having in a predetermined position of the frame for synchronization purposes an interval of a predetermined length without any signal, in which device the analog signal before decoding is transformed into a digital signal with the nominal sample rate of the broadcasting system, **characterized** in that it comprises as a combination steps in which:
- the power of the signal samples is calculated by squaring,
- the squared signal is decimating filtered and decimated in order to reduce the sample rate,
- the mean of the decimated signal is taken continuously for a time corresponding to a previous interval having the length of an interval without any signal,
- the obtained respective mean is compared to a previous mean value, which appears earlier at a distance with the length selected to be an interval without any signal,
- that moment is registered as first cross-over moment, when the mean goes below a value, which is lower than said earlier mean by a predetermined amount, and said lower value is registered,
- that moment is registered as second cross-over moment, when the mean again exceeds said registered lower value, and
- it is determined that an interval without any signal is detected, if the distance between said first and second cross-over moments is shorter than the predetermined length of an interval without any signal.

2. The frame synchronization method according to claim 1, **characterized** in that the mean of the decimated signal is taken for a previous period, which is shorter than the interval without any signal by an amount less than the length of the protection interval used in the system.

3. The frame synchronization method according to claim 1 or 2, **characterized** in that the squared signal is decimated by eight.

4. The frame synchronization method according to any previous claim, **characterized** in that that moment is registered, when the mean goes below a value, which is lower than said earlier mean by a predetermined amount selected in the range between 3 to 5 dB, when said earlier mean is earlier at a distance selected to correspond to said interval without any signal.

5. The frame synchronization method according to any previous claim, **characterized** in that the mean of the signal is taken for sample blocks so that the content of each sample block is added and scaled separately before said content is added to the mean estimate.

6. The frame synchronization method according to any previous claim, **characterized** in that the frame reference point is selected as the center point between said first and second cross-over moments.

7. A circuit arrangement for the frame synchronization in a device receiving a signal of a digital broadcasting system having in a predetermined position of the frame for synchronization purposes an interval of a predetermined length without any signal, in which device the analog signal is transformed before decoding into a digital signal with the nominal sample rate of the broadcasting system in order to direct said signal on a signal path to decoding, **characterized** in that a signal path is provided for said digital signal also to a circuit arrangement for said frame synchronization containing as a combination and connected in succession:
- a squaring circuit (5) to square the signal samples,
- a decimating filter (6) and a decimating circuit (7) to reduce the sample rate of the squared signal,
- a mean estimator (8) to continuously determine the sample mean values for a previous interval of the length of an interval without any signal,
- comparison and determination means (9) which are arranged to compare the obtained respective mean with a previous mean value, which appears earlier at a distance with the length selected to be an interval without any signal, to register that moment as first cross-over moment, when the mean goes below a value, which is lower than said earlier mean by a predetermined amount, and to register said lower value, to register that moment as second cross-over moment, when the mean again exceeds said registered lower value, and to determine that an interval without any signal is detected, if the distance between said cross-over moments is shorter than the predetermined length of an interval without any signal.

8. The circuit arrangement according to claim 7, **characterized** in that the mean estimator (8) is arranged to determine the mean for a previous period, which is shorter than the interval without any signal by an amount less than the length of the protection interval used in the system.

9. The circuit arrangement according to claim 7 or 8, **characterized** in that the decimating circuit (7) is a circuit decimating by eight.

10. The circuit arrangement according to claim 7 or 8, **characterized** in that the comparison and determination means (9) are arranged to register that moment, when the mean goes below a value, which is lower than said earlier mean by a predetermined amount selected in the range between 3 to 5 dB.

11. The circuit arrangement according to any previous claim 7 to 10, **characterized** in that the mean estimator (8) is arranged to take the mean for sample blocks so that the content of each sample block is added and scaled separately before said content is added to the the mean estimator's (8) output.

12. The circuit arrangement according to any previous claim 7 to 11, **characterized** in that the comparison and determination means (9) are arranged to select as the frame reference point the center point between said first and second cross-over moments.

## Patentansprüche

1. Verfahren zur Rahmensynchronisierung in einem Gerät, das ein Signal eines digitalen Rundfunksystems empfängt, das an einer vorbestimmten Position des Rahmens für Synchronisierungszwecke ein Intervall einer vorbestimmten Länge ohne Signal hat, wobei in dem Gerät das Analogsignal vor der Dekodierung in ein digitales Signal mit der nominellen Abtastrate des Rundfunksystems umgewandelt wird, dadurch gekennzeichnet, dass es in Kombination die folgenden Schritte umfasst:
- die Leistung der Signalproben wird durch Quadrieren errechnet,
- das quadrierte Signal wird dezimierend gefiltert und dezimiert, um die Abtastrate zu reduzieren,
- der Mittelwert des dezimierten Signals wird kontinuierlich für eine Zeit genommen, die einem vorherigen Intervall mit einer Länge eines Intervalls ohne Signal entspricht,
- der jeweilige erhaltene Mittelwert wird mit einem vorherigen Mittelwert verglichen, der mit einem zeitlichen Abstand früher erscheint, dessen Länge als ein Intervall ohne Signal gewählt wird,
- der Moment wird als erster Übergangsmoment registriert, wenn der Mittelwert unter einen Wert abfällt, der um einen vorbestimmten Betrag niedriger ist als der genannte frühere Mittelwert, und der genannte niedrigere Wert wird registriert,
- der Moment wird als zweiter Übergangsmoment registriert, wenn der Mittelwert wieder den genannten registrierten niedrigeren Wert übersteigt, und
- es wird ermittelt, dass ein Intervall ohne Signal erfasst wird, wenn der Abstand zwischen dem genannten ersten und dem genannten zweiten Übergangsmoment kürzer ist als die vorbestimmte Länge eines Intervalls ohne Signal.

2. Rahmensynchronisierungsverfahren nach Anspruch 1, dadurch gekennzeichnet, dass der Mittelwert des dezimierten Signals für eine vorherige Periode genommen wird, die um einen Betrag von weniger als der Länge des in dem System benutzten Schutzintervalls kürzer ist als das Intervall ohne Signal.

3. Rahmensynchronisierungsverfahren nach Anspruch 1 oder 2, dadurch gekennzeichnet, dass das quadrierte Signal um acht dezimiert ist.

4. Rahmensynchronisierungsverfahren nach einem der vorherigen Ansprüche, dadurch gekennzeichnet, dass der Moment registriert wird, wenn der Mittelwert unter einen Wert abfällt, der um einen vorbestimmten Betrag niedriger ist als der frühere Mittelwert, wobei der Betrag ausgewählt ist aus einem Bereich von 3 bis 5 dB, wenn der genannte frühere Mittelwert früher ist als ein Abstand, der so gewählt ist, dass er dem genannten Intervall ohne Signal entspricht.

5. Rahmensynchronisierungsverfahren nach einem der vorherigen Ansprüche, dadurch gekennzeichnet, dass der Mittelwert des Signals für Abtastblöcke genommen wird, so dass der Inhalt jedes Abtastblockes separat addiert und skaliert wird, bevor der genannte Inhalt zu dem geschätzten Mittelwert addiert wird.

6. Rahmensynchronisierungsverfahren nach einem der vorherigen Ansprüche, dadurch gekennzeichnet, dass der Rahmenreferenzpunkt als der Mittelpunkt zwischen dem genannten ersten und dem genannten zweiten Übergangsmoment gewählt wird.

7. Schaltungsanordnung für die Rahmensynchronisierung in einem Gerät, das ein Signal eines digitalen Rundfunksystems empfängt, das an einer vorbestimmten Position des Rahmens für Synchronisierungszwecke ein Intervall einer vorbestimmten Länge ohne Signal hat, wobei in dem Gerät das Analogsignal vor der Dekodierung in ein Digitalsignal mit der nominellen Abtastrate des Rundfunksystems transformiert wird, um das genannte Signal zur Dekodierung auf einen Signalpfad zu richten, dadurch gekennzeichnet, dass auch ein Signalpfad für das genannte digitale Signal zu einer Schaltungsanordnung für die genannte Rahmensynchronisierung bereitgestellt wird, die in Kombination und hintereinander geschaltet folgendes umfasst:
- eine Quadrierschaltung (5) zum Quadrieren der Signalproben,
- ein Dezimierungsfilter (6) und eine Dezimierungsschaltung (7) zum Reduzieren der Abtastrate des quadrierten Signals,
- eine Mittelwertschätzfunktion (8) zum kontinuierlichen Ermitteln der Abtastmittelwerte für ein vorheriges Intervall der Länge eines Intervalls ohne Signal,
- Vergleichs- und Ermittlungsmittel (9), die so angeordnet sind, dass sie den jeweiligen erhaltenen Mittelwert mit einem früheren Mittelwert vergleichen, der früher in einem zeitlichen Abstand mit der Länge erscheint, die als Intervall ohne Signal gewählt wurde, um den Moment als ersten Übergangsmoment zu registrieren, wenn der Mittelwert unter einen Wert abfällt, der um einen vorbestimmten Betrag niedriger ist als der genannte frühere Mittelwert, und um den genannten niedrigeren Wert zu registrieren, um diesen Wert als zweiten Übergangsmoment zu registrieren, wenn der Mittelwert wieder den genannten registrierten unteren Wert übersteigt, und um zu ermitteln, dass ein Intervall ohne Signal erfasst wird, wenn der Abstand zwischen den genannten Übergangsmomenten kürzer ist als die vorbestimmte Länge eines Intervalls ohne Signal.

8. Schaltungsanordnung nach Anspruch 7, dadurch gekennzeichnet, dass die Mittelwertschätzfunktion (8) die Aufgabe hat, den Mittelwert für eine vorherige Periode zu ermitteln, die um einen Betrag von weniger als der Länge des in dem System verwendeten Schutzintervalls kürzer ist als das Intervall ohne Signal.

9. Schaltungsanordnung nach Anspruch 7 und 8, dadurch gekennzeichnet, dass die Dezimierungsschaltung (7) eine um acht dezimierende Schaltung ist.

10. Schaltungsanordnung nach Anspruch 7 und 8, dadurch gekennzeichnet, dass die Vergleichs- und Ermittlungsmittel (9) so angeordnet sind, dass sie den Moment registrieren, wenn der Mittelwert unter einen Wert abfällt, der um einen vorbestimmten Betrag geringer ist als der frühere Mittelwert, der ausgewählt wird aus dem Bereich von 3 bis 5 dB.

11. Schaltungsanordnung nach einem der vorherigen Ansprüche 7 bis 10, dadurch gekennzeichnet, dass die Mittelwertschätzfunktion (8) so angeordnet ist, dass sie den Mittelwert für Probenblöcke nimmt, so dass der Inhalt jedes Probenblockes separat addiert und skaliert wird, bevor der genannte Inhalt zum Ausgang der Mittelwertschätzfunktion (8) addiert wird.

12. Schaltungsanordnung nach einem der vorherigen Ansprüche 7 bis 11, dadurch gekennzeichnet, dass die Vergleichs- und Ermittlungsmittel (9) so angeordnet sind, dass sie als Rahmenreferenzpunkt den Mittelpunkt zwischen dem genannten ersten und dem genannten zweiten Übergangsmoment wählen.

## Revendications

1. Procédé de synchronisation de trame dans un dispositif recevant un signal d'un système de diffusion numérique ayant, en une position prédéterminée de la trame et à des fins de synchronisation, un intervalle d'une longueur prédéterminée ne comportant aucun signal, dans lequel dispositif le signal analogique avant le décodage est transformé en un signal numérique avec la fréquence nominale d'échantillonnage du système de diffusion, caractérisé ce en qu'il comprend, sous la forme d'une combinaison, les étapes au cours desquelles :
- la puissance des échantillons de signal est calculée par sa mise au carré,
- le signal carré est filtré par décimation et est décimé de manière à diminuer la fréquence d'échantillonnage,
- la moyenne du signal décimé est prise en continu sur une durée correspondant à un intervalle précédent ayant la longueur d'un intervalle ne comportant aucun signal,
- la moyenne respective obtenue est comparée à une valeur moyenne précédente qui apparaît antérieurement à une distance dont la longueur sélectionnée est celle d'un intervalle ne comportant aucun signal,
- ce moment est enregistré en tant que premier moment de transition lorsque la moyenne descend en deçà d'une certaine valeur, qui est inférieure, d'une quantité prédéterminée, à ladite moyenne antérieure, ladite valeur inférieure étant enregistrée,
- ce moment est enregistré en tant que second moment de transition lorsque la moyenne dépasse à nouveau ladite valeur inférieure enregistrée, et
- il est déterminé qu'un intervalle ne comportant aucun signal est détecté si la distance séparant lesdits premier et second moments de transition est plus courte que la longueur prédéterminée d'un intervalle ne comportant aucun signal.

2. Procédé de synchronisation de trame selon la revendication 1, caractérisé en ce que la moyenne du signal décimé est prise sur une durée précédente, qui est plus courte, d'une quantité inférieure à la longueur de l'intervalle de protection utilisé dans le système, que l'intervalle ne comportant aucun signal.

3. Procédé de synchronisation de trame selon la revendication 1 ou 2, caractérisé en ce que le signal carré est décimé d'un facteur huit.

4. Procédé de synchronisation de trame selon l'une quelconque des revendications précédentes, caractérisé en ce que ce moment est enregistré lorsque la moyenne descend en deçà d'une certaine valeur, qui est inférieure, d'une quantité prédéterminée sélectionnée dans la plage comprise entre 3 et 5 dB, à ladite moyenne antérieure, lorsque ladite moyenne antérieure est antérieure à une distance sélectionnée de façon à correspondre audit intervalle ne comportant aucun signal.

5. Procédé de synchronisation de trame selon l'une quelconque des revendications précédentes, caractérisé en ce que la moyenne du signal est prise sur des blocs d'échantillons de manière que le contenu de chaque bloc d'échantillon soit ajouté et mis à l'échelle de façon séparée avant que ledit contenu ne soit ajouté à l'estimation de la moyenne.

6. Procédé de synchronisation de trame selon l'une quelconque des revendications précédentes, caractérisé en ce que le point de référence de trame est sélectionné en tant que point central entre lesdits premier et second moments de transition.

7. Agencement de circuit destiné à la synchronisation de trame dans un dispositif recevant un signal d'un système de diffusion numérique ayant, en une position prédéterminée de la trame et à des fins de synchronisation, un intervalle d'une longueur prédéterminée ne comportant aucun signal, dans lequel dispositif le signal analogique est transformé, avant le décodage, en un signal numérique avec la fréquence nominale d'échantillonnage du système de diffusion de manière à diriger ledit signal sur un trajet de signal menant à son décodage, caractérisé en ce qu'un trajet de signal est établi, qui mène également ledit signal numérique à un agencement de circuit destiné à ladite synchronisation de trame et qui contient, sous leur forme combinée et connectée successivement :
- un circuit de mise au carré (5) pour mettre au carré les échantillons de signal,
- un filtre de décimation (6) et un circuit de décimation (7) pour diminuer la fréquence d'échantillonnage du signal carré,
- un estimateur de moyenne (8) pour déterminer en continu les valeurs de moyenne d'échantillon sur un intervalle précédent ayant la longueur d'un intervalle ne comportant aucun signal,
- des moyens de comparaison et de détermination (9) qui sont configurés pour comparer la moyenne respective obtenue à une valeur moyenne précédente qui apparaît antérieurement à une distance dont la longueur sélectionnée correspond à celle d'un intervalle ne comportant aucun signal, pour enregistrer ce moment en tant que premier moment de transition lorsque la moyenne descend en deçà d'une certaine valeur, qui est inférieure, d'une quantité prédéterminée, à ladite moyenne antérieure, et pour enregistrer ladite valeur inférieure, pour enregistrer ce moment en tant que second moment de transition lorsque la moyenne dépasse à nouveau ladite valeur inférieure enregistrée, et pour déterminer qu'un intervalle ne comportant aucun signal est détecté si la distance séparant lesdits moments de transition est plus courte que la longueur prédéterminée d'un intervalle ne comportant aucun signal.

8. Agencement de circuit selon la revendication 7, caractérisé en ce que l'estimateur de moyenne (8) est configuré pour déterminer la moyenne sur une durée précédente, qui est plus courte, d'une quantité inférieure à la longueur de l'intervalle de protection utilisé dans le système, que l'intervalle ne comportant aucun signal.

9. Agencement de circuit selon la revendication 7 ou 8, caractérisé en ce que le circuit de décimation (7) est un circuit qui décime d'un facteur huit.

10. Agencement de circuit selon la revendication 7 ou 8, caractérisé en ce que les moyens de comparaison et de détermination (9) sont configurés pour enregistrer ce moment lorsque la moyenne descend en deçà d'une certaine valeur, qui est inférieure, d'une quantité prédéterminée sélectionnée dans la plage comprise entre 3 et 5 dB, à ladite moyenne antérieure.

11. Agencement de circuit selon l'une quelconque des revendications précédentes 7 à 10, caractérisé en ce que l'estimateur de moyenne (8) est configuré pour prendre la moyenne sur des blocs d'échantillons de manière que le contenu de chaque bloc d'échantillon soit ajouté et mis à l'échelle de façon séparée avant que ledit contenu ne soit ajouté au résultat de l'estimateur de moyenne (8).

12. Agencement de circuit selon l'une quelconque des revendications précédentes 7 à 11, caractérisé en ce que les moyens de comparaison et de détermination (9) sont configurés pour sélectionner en tant que point de référence de trame le point central entre lesdits premier et second moments de transition.
